(19) Europäisches Patentamt
European Patent Office
Office européen des brevets

(11)  EP 2 216 679 B1

(12)  **EUROPEAN PATENT SPECIFICATION**

(45) Date of publication and mention
of the grant of the patent:
**30.07.2014  Bulletin 2014/31**

(51) Int Cl.:
**G03B 21/20** (2006.01)

(21) Application number: **07845752.0**

(86) International application number:
**PCT/CN2007/003389**

(22) Date of filing: **30.11.2007**

(87) International publication number:
**WO 2009/070918 (11.06.2009 Gazette 2009/24)**

(54) **LIGHT SOURCE FOR PROJECTION SYSTEM AND PROJECTION DISPLAY APPARATUS**

LICHTQUELLE FÜR EIN PROJEKTIONSSYSTEM UND PROJEKTIONSVORRICHTUNG

SOURCE LUMINEUSE POUR SYSTÈME DE PROJECTION ET APPAREIL D'AFFICHAGE PAR PROJECTION

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**11.08.2010  Bulletin 2010/32**

(73) Proprietors:
• **Phoebus Vision Opto-Electronics Technology Ltd.**
**Beijing 100086 (CN)**
• **The Academy Of Opto-electronics, Chinese Academy Of Sciences**
**Haidian District**
**Beijing 100080 (CN)**

(72) Inventors:
• **BI, Yong**
**Beijing 100080 (CN)**
• **CHENG, Hua**
**Beijing 100080 (CN)**
• **WANG, Bin**
**Beijing 100080 (CN)**
• **ZHENG, Guang**
**Beijing 100080 (CN)**
• **WANG, Yanwei**
**Beijing 100080 (CN)**
• **FENG, Meiyan**
**Beijing 100086 (CN)**
• **JIA, Zhongda**
**Beijing 100086 (CN)**

(74) Representative: **Brandon, Paul Laurence**
**Appleyard Lees**
**15 Clare Road**
**Halifax, HX1 2HY (GB)**

(56) References cited:
**CN-A- 1 734 347          JP-A- 2004 226 460**
**JP-A- 2006 301 114      JP-A- 2006 337 941**
**JP-A- 2007 206 359      US-B2- 6 561 654**

## Description

### Field of the Invention

The present invention relates to a light source device and a projection display device, particularly to a light source device and a projection display device for a projection display system.

### Background of the Invention

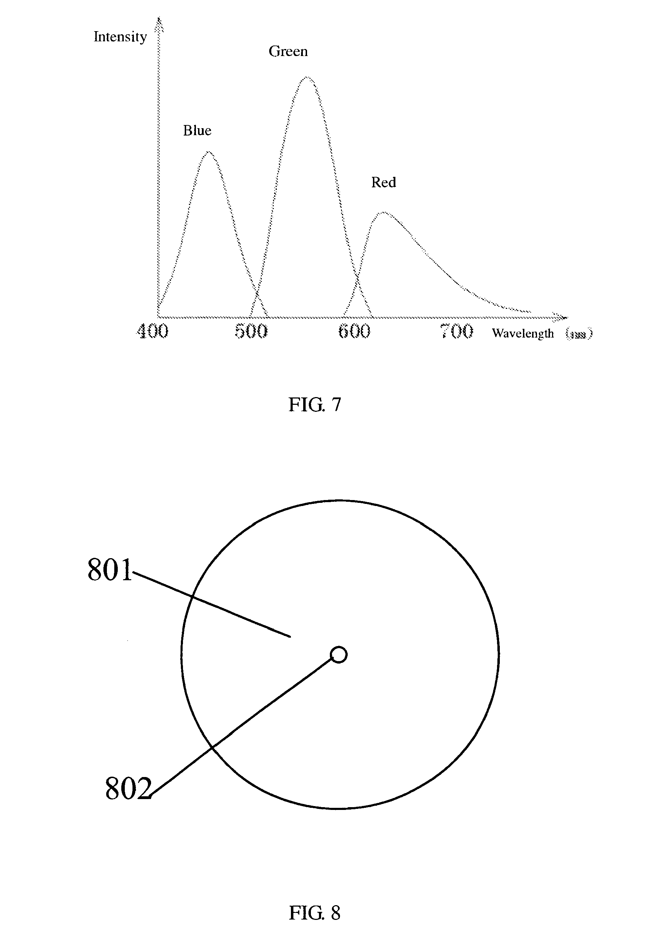

The illumination of the existing projection systems adopts ultra high-pressure mercury lamps, metal halide lamps, xenon lamps, halogen lamps and etc. The spectrums of these lumination sources are all restricted by luminescent materials and their states and show the characteristics of a continuous or band spectrum. For example, as shown in FIG. 7 which illustrates the spectrum of an ultra high-pressure mercury lamp, the wave band of red light is relatively wide while the peak value of the red light is relatively low, i. e., the intensity distribution of the three primary colors - red, green and blue can not meet the requirements of white color balance. Therefore, the ultra high-pressure mercury lamp may not meet the requirements of a projection system on illumination. At present, a wide spectral band is typically used to enhance the luminous flux and brightness of red light, but color saturation would be reduced accordingly. Moreover, during processing of video signals, the prior art increases the brightness of red color also at the cost of contrast and color saturation. Therefore, although the prior art may soften the color of images, the overall quality of the images declines.

In the recent years, with the development of LED technology, LED is attempted to be used as a light source for a projection system. Comparing with conventional display technology, projection display using LED has a wider range of color gamut. In addition, LED has smaller line width and higher color saturation and may display the true and bright colors in the nature. Furthermore, LED enjoys a long life and is a mercury-free environment-friendly light source. LED projection display has become a major development direction of display field.

However, owing to the large optical etendue and low brightness of LED, the existing technology for LED illumination has the defects of low optical energy efficiency and low output optical power in total.

Although the luminous flux and brightness of LED have been increased remarkably, they are not yet sufficient for applications to projectors, particularly to the situations requiring high illuminating brightness. To meet the requirements of applications to projectors and raise illuminating brightness, the prior art raises luminous flux and brightness by arrangement and combination of LEDs, but as LEDs are Lambertian light sources, if the optical etendue of the combined LED light sources exceeds the optical etendue of a projection system, the excessive light can not be effectively coupled into the projection system.

The optical etendue of LED is

$$E_{Led} = n^2 \cdot \pi \cdot \sin^2(\alpha) \cdot S$$

Where n is a refractive index of luminescent medium; $\alpha$ is an emission half-angle of the light source; S is a light-emitting area of the light source. The emission half-angle of LED is 90°. Supposing the luminescent medium is air and the refractive index of air is 1, approximate calculation is conducted and the optical etendue of LED with area of $1mm^2$ is about $3.14mm^2$sr.

For a projection system using 0.79-inch imaging chip and F2.4 projection lens, its optical etendue is about $E_{projector}$ = $22mm^2$sr. Only the light output from diode array within area of about $7mm^2$ may be coupled into the projection system and the aggregate luminous flux that can be fully used is only hundreds of lumen, whereas the light emitted from additional area of the LED array beyond the area of $7mm^2$ is unable to be coupled into the projection system at all. Therefore, it is impossible to raise luminous flux by increasing the area of LED.

Further, the conventional ultra high-pressure mercury lamps in the current market can generate thousands of lumen of luminous flux at area of $6mm^2$ and their brightness is more than ten times higher than that of an LED. Nevertheless, ultra high-pressure mercury lamp uses heavy metal mercury, so it is not an environment-friendly light source.

Among the LED light sources in the current market, when an LED with light-emitting area of $7mm^2$ is applied to a projection system using 0.79-inch imaging chip and F2.4 projection lens, owing to the restriction of the optical etendue of the projection system, the maximum optical power of the red light that may be coupled into the projection system is about 1.6W, the maximum optical power of green light is about 0.7W, the maximum optical power of blue light is about 1.8W and the ratio of maximum optical power of the red light, green light and blue light that can be coupled into the projection system is about 1: 0.44: 1.13. However, a white field with color temperature of 6500K requires the optical power ratio of the red light, green light and blue light of LED shall be about 1: 0.87: 1.73. Thus, when the red light or blue light of LED meets the requirements on maximum optical power, the optical power of green light will be inadequate. Green light is most inadequate. The inadequate optical power of green light results in low total optical power. This is an important reason for the inadequate brightness of LED projection display. The existing solution is to raise brightness by increasing the time duty cycle of green light in white light. This solution doesn't make full use of the optical power of red light and blue light. An alternative solution is to obtain white balance by reducing the optical power of red light and blue light. Owing to the restriction of the optical power of green light, this solution results in low optical power of the synthesized white light.

Anyway, all kinds of light sources for projection display in the prior art show a gap from the optical power ratio of red, green and blue light to the required value of a white field, thereby resulting in inadequate color saturation, brightness and contrast and failure to achieve the integrated effect of increasing color saturation, brightness and contrast and controlling cost in the same time.

US 6 561 654 discloses an image display device that is suitably applicable to, for example, a projector using an ultrahigh-pressure mercury lamp as a light source. In a light source of the present invention, main light is partially replaced with auxiliary light in a wavelength region in which the intensity of the main light is less than that of the auxiliary light. That is, the light source includes an illumination-light combining member that generates illumination light by strengthening the wavelength region of the emission spectrum of the main light with the auxiliary light. Accordingly, the loss of main light is satisfactorily reduced, and the light intensity in the wavelength region in which the intensity of the main light is insufficient is compensated for. Further, light emitted from the main light source formed of a lamp or the like is efficiently utilized, and a bright image can thereby be displayed with high colour reproducibility.

CN 1 734 347 discloses a method of improving projection light source life, colour usage and luminance, which comprises the following steps: using one of the high-voltage mercury lamp, super-voltage mercury lamp, metal halide lamp, iodine tungsten lamp and xenon lamp as projection light source, wherein the more luminous light source is a base arrangement or multi-colour auxiliary light source. When the colour beam from colour auxiliary light source adding to the projection light source reaches the need balance, the beam is output in the projection direction.

JP 2006 337941 discloses an image projection device and an image projection method capable of projecting images of a wide range of colours, facilitating the work of the light source replacement, and achieving a longer life of the device. The image projection device at least comprises a light source, a light modulation part for modulating the light from the light source in correspondence with the information, and a projection optical part for projecting the light emitted from the light modulation part. The light source consists of a solid light source like a laser diode, and a discharge lamp, and is composed integrally with a light compositing part for at least compositing the light emitted from the discharge lamp and the light emitted from the solid light source, in a replaceable manner.

JP 2006 301114 discloses an illumination device restraining speckle noise from being produced without lowering the efficiency of using light even when a semiconductor laser is used as the light source of the illumination device, and a picture display device. The illumination device includes: at least one light source to emit coherent light; the light source to emit incoherent light; a colour discriminating member; and a driving part to drive the colour discriminating member, and is constituted to provide a diffusion part for the coherent light in the colour discriminating member.

JP 2007 206359 discloses an image projection device and an image projection method that can project images over a wide colour region. The image projecting device has at least a light source comprising a solid light source and a discharge lamp; a light compositing part compositing the light emitted from the solid light source and light emitted from the discharge lamp; an optical modulation part for modulating the light emitted from the light compositing part, according to information; and a projection optical part projecting the light emitted from the optical modulation part. The solid light source is constituted of a plurality of laser diodes, having different wavelengths respectively, and the light source is equipped with a condensing lens that shapes the light emitted from the plurality of laser diodes.

JP 2004 226460 discloses an illumination optical system which is equipped with auxiliary light sources emitting a light beam for supplementing the beam having an intensity peak in a specified wavelength region at a low density beam part in the vicinity of the central and/or at the outer circumferential part of the beam from a main light source equipped with a reflector. The illumination optical system is equipped with: outer circumferential and central auxiliary light sources for supplementing the beam having the intensity peak in a red wavelength region at the low density beam part in the outer circumferential part and the central part of the beam from a main light source equipped with an extra-high pressure mercury lamp and a paraboloidal mirror reflector; and a main integrator part, an outer circumferential integrator part and a central integrator part for realizing the uniformization of the light quantity distribution of the beams from the respective light sources. The beams from the laser beam sources of the light source are introduced to positions nearly rotationally symmetric with each other with respect to an optical axis, and a member on an optical path is nearly the same as that from the light source and arranged in parallel with that from the light source.

## Summary of the Invention

Therefore, the present invention is to provide a light source device for a projection system that uses a laser light source as a supplementing light source to improve the brightness, contrast and color saturation of projection display images.

The present invention is further to provide a projection display device.

In an aspect, the present invention provides a light source device for projection display, comprising a light source to be supplemented and a laser light source, wherein the laser emitted from the laser light source and the light emitted from the light source to be supplemented are coaxially mixed and then output in a same direction;

characterised in that the light source to be supplemented is an LED light source comprising a plurality of LEDs with at least one laser hole therebetween, and the laser emitted from the laser light source is output through the laser hole and is mixed directly with the light emitted from the LED light source and output in a same direction.

Further features of the present invention are set out in the appended claims.

By using the foregoing technical solutions, the defect of inadequate illumination of red light emitted from ultra high-pressure mercury lamps, metal halide lamps, xenon lamps, halogen lamps and other lamps may be overcome, the brightness of red light is improved, the intensity distribution of three primary colors - red, green and blue is adjusted, the color saturation, contrast and other performances are improved, thus the above technical solution have a very high practical value in the field of projection display.

By using the foregoing technical solutions, the laser with high brightness and small optical etendue may be used to supplement the LED light with low brightness and large optical etendue, and thus the optical power of LED, the brightness of the light source and the effective utilization rate of optical energy are increased, and the defects that the illumination of LED green light is inadequate and red light and blue light are not fully used or are wasted are overcome. In addition, the light source device according to the present invention also possesses the features of wide color gamut, long life, no mercury and environmental friendliness, and the advantage of low price, and thus has a very high practical value in the field of projection display.

**Brief Description of the Drawings**

Hereinafter, embodiments of the present invention will be described in details with reference to the attached drawings, wherein:

FIG. 1 is a schematic of a light source device in which laser and LED light is mixed directly and output;

FIG. 2, FIG. 3 and FIG. 4 are schematics of light source devices in which laser and LED light is mixed directly;

FIG. 5 is a schematic of a light source device in which a laser is supplemented in addition to a lamp by using an ordinary reflector;

FIG. 6 is a schematic of a light source device in which a laser is supplemented in addition to an LED by using an ordinary reflector;

FIG. 7 is a schematic of the luminescent spectrum of an ultra high-pressure mercury lamp;

FIG. 8 is a top-view illustrating the structure of a reflector;

FIG. 9 is a schematic of a light source device, in which a laser is supplemented in addition to a lamp by using a reflector, for a projection display;

FIG. 10 is a spectrogram after the light of the laser and an ultra high-pressure mercury lamp is mixed;

FIG. 11 is a schematic of a light source device in which laser and LED light is mixed;

FIG. 12 is a structural schematic of a reflector according to another embodiment;

FIG. 13 is a schematic of a light source device, in which laser is supplemented in addition to a lamp by using a reflector, for a projection display;

FIG. 14 is a schematic of a light source device in which laser and LED light is mixed;

FIG. 15 and FIG. 16 are a side view and perspective view respectively of a new type of reflector prism;

FIG. 17 is a schematic of an alternative reflector prism;

FIG. 18 is a schematic of a light source device in which a laser is supplemented in addition to a lamp by using a reflector prism;

FIG. 19 is a schematic of a light source device in which a laser is supplemented in addition to an LED by using a reflector prism;

FIG. 20 and FIG. 21 are schematics showing the beams from each of the two types of three-primary-color LED lamps and the beam of RGB laser are combined as a projection display light source;

FIG. 22 is a schematic of the optical configuration for a single-DLP projector;

FIG. 23 is a schematic of the optical configuration for a tri-DLP projector;

FIG. 24 is a schematic of the optical configuration for a single-DLP projector in which the beam from a three-primary-color LED lamp and the laser beam of RGB are combined as a projection display light source;

FIG. 25 is a schematic of the optical configuration for a single-DLP projector in which the beam from a three-primary-color LED lamp and the beam of monochrome laser are combined as a projection display light source;

FIG. 26 is a schematic of the optical configuration for a tri-LCD projector in which the beam from a three-primary-color LED lamp and the beam of monochrome laser are combined as a projection display light source;

FIG. 27 is a schematic of the optical configuration for a three LCOS projector in which the beam from a three-primary-color LED lamp and the beam of monochrome laser are combined as a projection display light source;

FIG. 28 is a schematic of the optical configuration for a three LCD projector;

FIG. 29 is a schematic of the optical configuration for a three LCOS projector.

**Detailed Description of the Embodiments**

As the spot and divergence angle of laser are both small, the optical etendue of laser is small. The optical etendue of the laser output from an optical fiber is determined by the following equation:

$$E_{laser} = \pi^2 r^2 \sin^2 \theta$$

Where, r is the radius of the fiber bundle, and sin θ is the numerical aperture of the optical fiber. The fiber bundle is combined by one or more optical fibers.
For example, the optical etendue of the laser output from a fiber bundle with r=0.35mm and sin θ=0.22 is only $5.22 \times 10^{-2}$mm$^2$sr, more than two orders of magnitude lower than that of LED. The luminous flux under this optical etendue may reach several thousand lumens to ten thousand lumens. Therefore, for laser, high output of luminous flux can be obtained with small optical etendue.
In a hybrid light source with an LED and a laser, provided that the optical etendue of LED is $E_{led}$, the optical etendue of a laser is $E_{laser}$ and the total optical etendue of the hybrid light source is $E_{total}$ which is the sum of the optical etendue of the LED and the optical etendue of the laser, then the optical power of this hybrid light source can be totally and effectively coupled into the projection system if $E_{total} = E_{led}+E_{laser} \leq E_{projector}$. As $E_{laser}$ is much less than $E_{led}$ and almost negligible, a large part of the optical etendue of this hybrid light source may be distributed to LED so as to make full use of the optical energy of the cheap LED; and a small part of the optical etendue of the hybrid light source may be distributed to the laser so as to make full use of the characteristic of the laser that high brightness can be obtained with small optical etendue, thereby enhancing the overall brightness of the hybrid light source.
The present invention will be described in details in connection with drawings and embodiments.

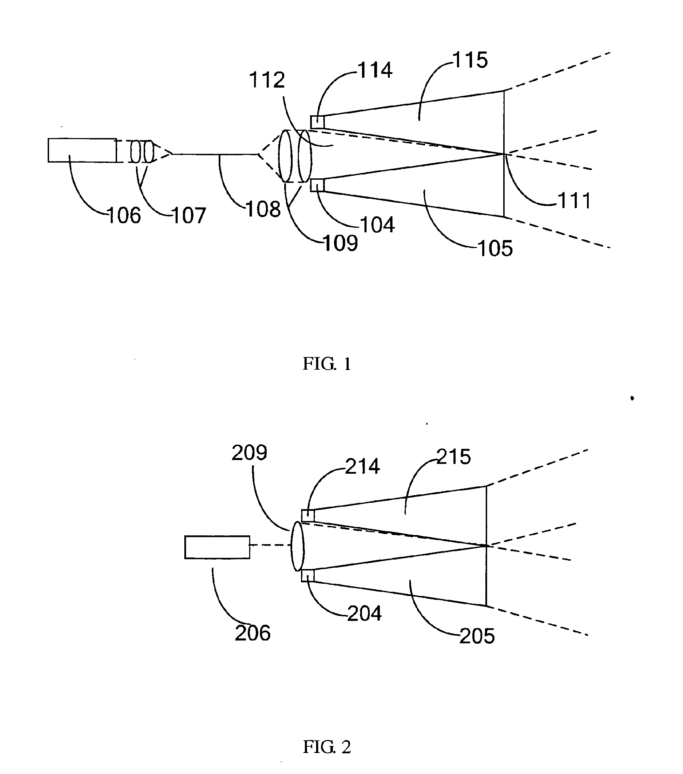

FIG. 1 shows a light source device in which laser and LED light is mixed directly and output. The light source device includes a laser light source 106 and two LEDs 104 and 114. On the output optical path of each LED, a wedge-shaped rectangular pyramid is disposed as a beam shaping device that compresses the divergence angle of the light output from the LED. The laser output from the laser light source 106 is firstly coupled into an optical fiber 108 via a coupling lens group 107. The laser output from the optical fiber 108 passes a focusing lens group 109 and then is output in a direction which is the same as the direction of the LED light output from the wedge-shaped rectangular pyramids, and thus the laser and the LED light is mixed. The laser device may be a solid state laser device, a gas laser device, an optical fiber laser device, a semiconductor laser device or else.
Generally speaking, it is preferred that the aperture angle of the light output from the light source device is equal to the aperture angle of the projection system. If the former is greater than the latter, optical energy will be wasted; if the former is much less than the latter, the size of aperture angle could not be used effectively. Therefore, in this embodiment, beam shaping devices 105 and 115 are used to compress the divergence angle in the form of Lambertian of the LED, so that the compressed divergence angle is smaller than or equal to the aperture angle of the projection system. In addition to the wedge-shaped rectangular pyramids, other optical devices that have a function of compressing divergence angle may also be used. The focusing lens group may include a beam expanding lens for expanding laser beam to improve the feture of scattering of the laser beam, so that the laser may be mixed with the LED light in a better way. In practical applications, beam expanding lens may or may not be removed according to practical requirements. It is customary technical means in the art that the laser is coupled into optical fiber 108 via the coupling lens group 107. In addition, those skilled in the art may determine whether to couple the laser into the optical fiber according to practical requirements. The two LEDs as shown in FIG. 1 each may be an LED array, or a part of an LED array. The laser device 106 may be one in a laser device array. A laser hole 112 is between the neighboring LEDs for mixing the laser and the LED light. The laser output from the laser device or the laser device array passes the corresponding laser hole and is mixed with the LED light. As the light-emitting area of the LED array is restricted by the optical etendue of the subsequent projection system, the LED arrangement density in the LED array should be increased to raise luminous flux. For this reason, the size of laser holes can not be too large. The laser beam may be focalized into a smaller light spot via the focusing lens group 109 and then enters the laser hole, and the LED arrangement density in LED array and luminous flux of the light source device may be improved. In the structure shown in FIG. 1, as wedge-shaped rectangular pyramids whose sections are greater than those of the LEDs are used as the beam shaping devices, a gap 111 is provided between the two wedge-shaped rectangular pyramids, so that the laser can exit without difficulty by focalizing the laser beam to the gap 111 via the focusing lens group 109. This may maximize the arrangement density of the LED array.

FIG. 2 is a schematic of a light source device in which the laser and the LED light is mixed directly. The light source device includes a laser light source 206 and two LEDs 204 and 214. On the output optical path of each LED, a wedge-shaped rectangular pyramid 205 or 215 is disposed as a beam shaping device that compresses the divergence angle of the light output from the LED. The laser output from the laser light source 206, after passing the focusing lens group 209, is mixed with the LED light output via wedge-shaped rectangular pyramids 205 and 215, and then the mixed light is output in a same direction. In FIG. 2, the laser and the LED light is mixed and output without using a coupling lens group or an optical fiber as used in FIG. 1. Likewise, the focusing lens group may also include a beam expanding lens. In practical applications, various beam adjustment system may be used depending on the laser devices and the optical structure.

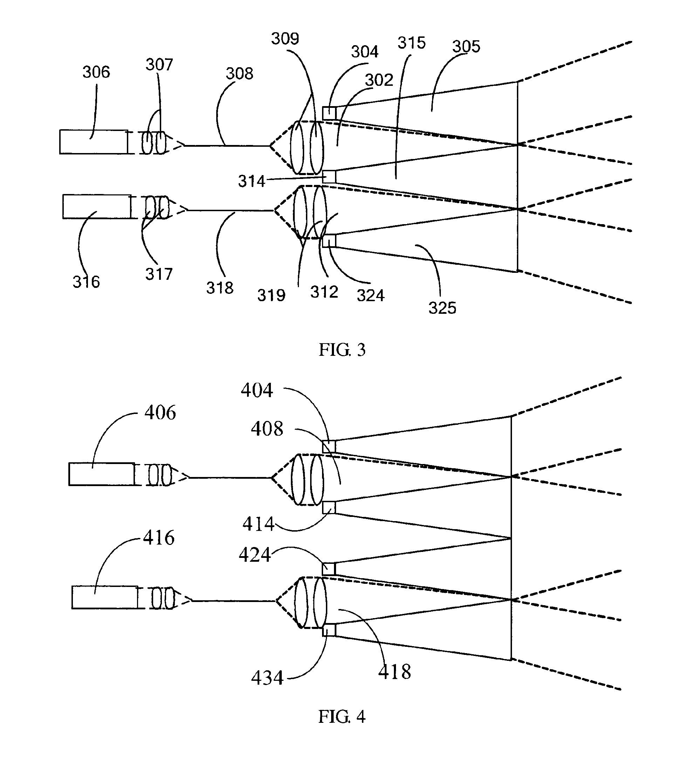

FIG. 3 is a schematic of a light source device in which laser and LED light is mixed directly according to an embodiment. The light source device includes two same laser light sources and three LEDs. On the output optical path of each LED, a wedge-shaped rectangular pyramid is disposed as a beam shaping device that compresses the divergence angle of the light output from the LED. The laser output from laser light sources 306 and 316 is firstly coupled into optical fibers 308 and 318 via respective coupling lens groups 307 and 317, respectively. The laser output from the optical fibers 308 and 318 is focalized by focusing lens groups 309 and 319 respectively and then is output via laser holes 302 and 312 respectively in a direction which is the same as the direction of the light of LEDs 304, 314 and 324 output via wedge-shaped rectangular pyramids 305, 315 and 325 respectively. Laser holes 302 and 312 are symmetrically disposed so that the mixed light has better shimming effect.

FIG. 4 is a schematic of a light source device in which laser and LED light is mixed directly according to another embodiment. The light source device includes an LED array including four LEDs and a laser device array including two laser devices. The mixing manner of laser and LED light is the same as that of FIG. 1. The laser from a laser device 406 passes through a laser hole 408 between a first LED 404 and a second LED 414. The laser from a laser device 416 passes through a laser hole 418 between a third LED 424 and a fourth LED 434 and is directly mixed with the light output from the LED array. Uniform mixed light may be obtained since the laser is mixed with the light output from the LED array in a symmetric manner.

Alternatively, only one laser device may be supplemented between the second LED 414 and the third LED 424. Alternatively, three laser devices may be supplemented at the laser holes between the first LED 404 and the second LED 414, between the second LED 414 and the third LED 424, and between the third LED 424 and the fourth LED 434 respectively. In this embodiment, the laser holes are symmetrically arranged. However, those skilled in the art will recognize that the laser holes may be arranged asymmetrically according to practical requirements, which will also fall into the scope of the present invention.

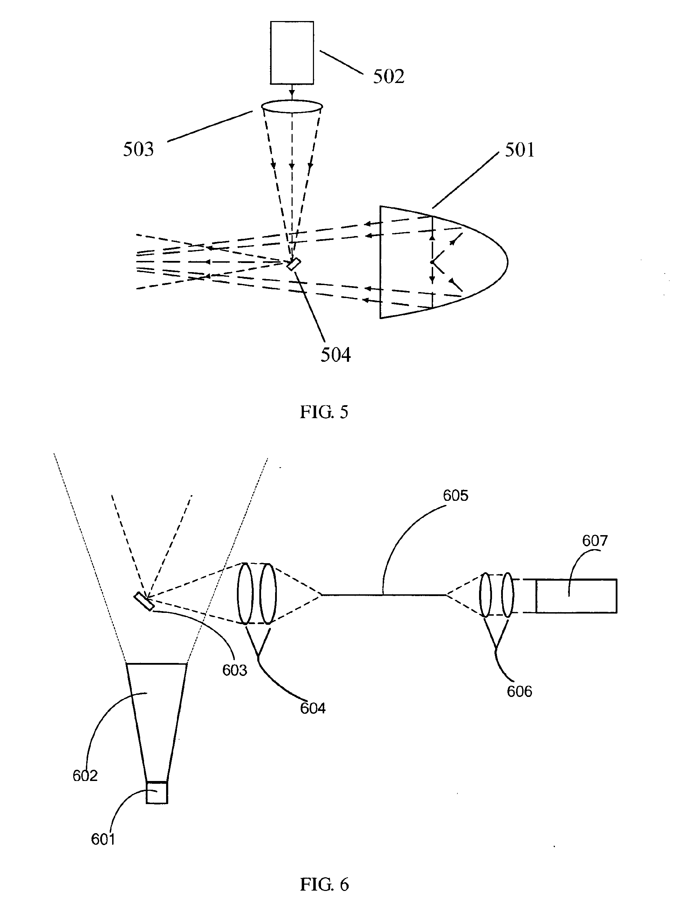

FIG. 5 and FIG. 6 provide light source devices in which laser and the light output from a light source to be supplemented is mixed by using an ordinary reflector according to two embodiments respectively.

FIG. 5 is a light source device in which a laser is supplemented in addition to a lamp by using an ordinary reflector. This light source device includes a laser device 502, a focusing lens 503, a reflector 504 as well as a lamp 501 as a light source to be supplemented. The red laser beam emitted from the laser device 502 is focalized by the focusing lens 503 onto or near the surface of the reflector 504. The surface of the reflector 504 is plated with high-reflective film that is highly reflective to the wavelength of the incident red laser. After the laser beam is reflected by the reflector 504 on its surface, its emergent direction is the same as the direction of the beam emitted from the lamp, and thus the light beams output from the laser light source and the lamp are mixed. The focusing lens 503 may be replaced with a focusing lens group or other optical elements having a function of focusing. The focusing lens group may also include a beam expanding lens for expanding laser beam since the laser diverged at a specific divergence angle may be mixed with the lamp better, especially when the reflected laser beam is on a same axis with lamp beam. The laser device 502 may be a solid state laser device, a semiconductor laser device, an optical fiber laser device, a gas laser device or else. The laser device 502 may be a laser device emitting red laser preferably with a wavelength of 630nm~670nm. The lamp herein may be an ultra high-pressure mercury lamp, a metal halide lamp, a halogen lamp or a xenon lamp, which is well known to those skilled in the art. The focus of the laser from the focusing lens 503 should be kept onto or near the surface of the reflector 504, so that all incident laser can be reflected while the impact of the reflector on the beam output from the lamp is reduced. In this way, it is possible that the volume of the reflector 504 is small, so that the blockage of the light output from the lamp due to the reflector is reduced.

FIG. 6 is a light source device in which a laser is supplemented in addition to an LED by using an ordinary reflector. The light source device includes an LED light source 601, a beam shaping device 602, a reflector 603, a laser device 607, a coupling lens group 606, an optical fiber 605 and a focusing lens group 604. After the light emitted from the LED light source 601 is shaped by the beam shaping device 602, the divergent angle in the form of Lambertian is compressed. The compressed divergence angle may be determined according to the aperture angle of the subsequent projection system. The laser emitted from the laser light source 607 enters the optical fiber 605 via the coupling lens group 606, the emergent light from the optical fiber 605 is focalized by the focusing lens group 604, and the divergence angle of the laser should also be controlled within the aperture angle of the projection system. The optical path is adjusted, so that the focus of the laser beam focalized by the focusing lens group 604 is on or near the surface of the reflector 603. After reflection by reflector 603, the optical axis of the laser beam and the optical axis of the LED beam output from the beam shaping device 602 are in a same direction, thus the light beams from the two light sources are mixed and output. Those skilled in the art will recognize that the LED light source may be a white LED light source, or any other monochrome LED light source depending on practical requirements; and the beam shaping device for compressing the divergence angle of the light output from an LED light source may be realized with a wedge-shaped rectangular pyramid or other optical devices.

However, the disadvantage of the use of the reflector shown in FIG. 5 or FIG. 6 is obvious. That is, a part of the light in the beam emitted from the light source to be supplemented is blocked by the reflector. In order to minimize the blockage of the reflector to beam energy, the reflector should be made as small as possible. In fact, it is enough that the reflecting surface of the reflector is equal to the section of the laser beam. In practical applications, the diameter of the focal spot of the laser beam is at the level of millimeter. Such a small reflector not only has high production cost but also can hardly be fixed in a real optical path due to tiny volume. Moreover, the fixing device will interfere with the optical path, too. What is the worse, as the fixing device must appear in the optical path, it blocks much more light beams to be supplemented than the reflector does.

FIG. 8 shows a top-view illustrating the structure of a reflector. The reflector includes a reflection part 801 that reflects the light output from a light source to be supplemented, and a light passing hole 802 that allows the laser emitted from a laser light source to pass directly. The reflection part 801 of the reflector may be plated with high-reflective film that enhances the reflection of the beam output from the light source to be supplemented. The reflector may be in a shape of disc, rectangle, flat, strip or any other planar shape, or designed into different shapes, such as paraboloid, hyperboloid or sphere, according to practical applications. The light passing hole 802 may be at the center of the reflector, or may be at any other position of the reflector as required.

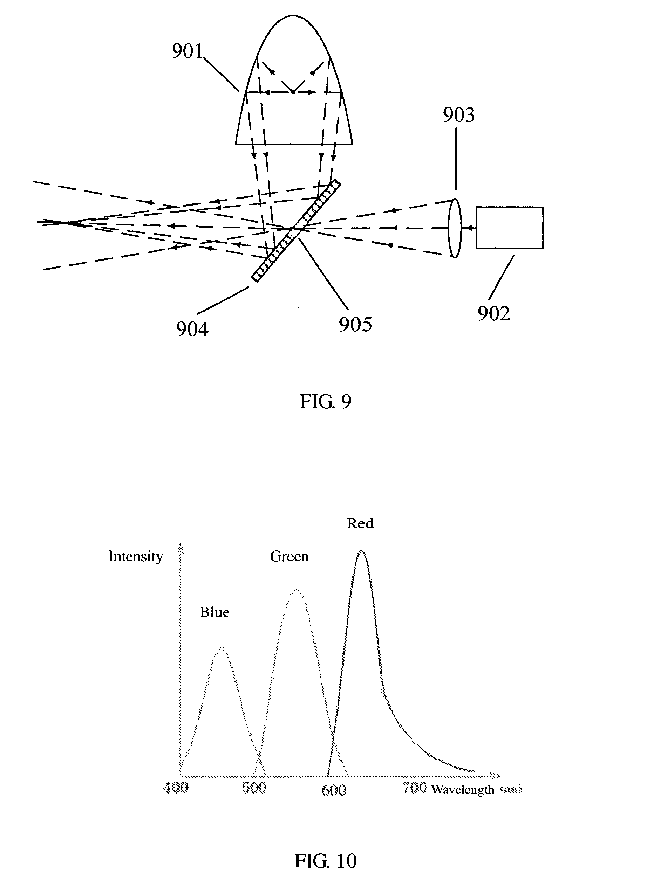

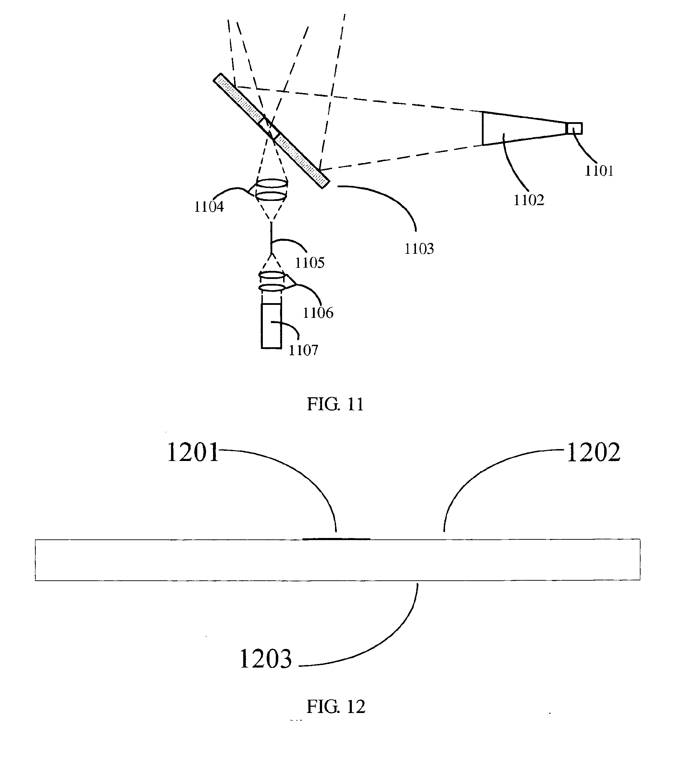

FIG. 9 and FIG. 11 shows light source devices in which laser is mixed with light emitted from a light source to be supplemented by using a reflector with a structure shown in FIG. 8 according to two embodiments respectively.

FIG. 9 shows a light source device, in which a laser is supplemented in addition to a lamp, for a projection display. The light source device includes a laser light source 902, a focusing lens 903, a lamp 901 and a reflector 904. The laser light source 902 is a red light emitting laser device, the reflector 904 is of a circular flat structure, there is a light passing hole 905, the diameter of which is 3mm, at the center of the reflector 904, the rest part of the reflector 904 is a reflection part, which may be plated with wide-band high-reflective film for visible light. The laser beam emitted from red light emitting laser device 902 passes through the focusing lens 903 and then is directly output through the light passing hole 905 of the reflector 904. The light beam emitted from the lamp 901 is reflected by the reflection part of the reflector 904 and then is output in a direction which is the same as that of the laser beam that directly passes through light passing hole 905, thus the laser beam and the light beam from the lamp are mixed. Moreover, the optical axes of the two kinds of light coincide during mixing, thus the red light is supplemented. The focusing lens 903 may be replaced with a focusing lens group or other optical elements having a function of focusing. A beam expanding lens may be included in the focusing lens group so as to increase the divergence of the laser and thus make the mixing effect better. Moreover, if the reflected lamp beam is on a same axis with the laser beam, the mixing effect will be much better. The laser device 902 may be a solid state laser device, a semiconductor laser device, an optical fiber laser device, a gas laser device or else. The laser device 902 may be a laser device emitting red laser with preferably a wavelength of 630nm~670nm. The lamp herein may be an ultra high-pressure mercury lamp, a metal halide lamp, a halogen lamp or a xenon lamp. The focus of the laser from the focusing lens 903 should be kept onto or near the light passing hole 905 of the reflector 904, so that all incident laser can pass through while the impact of the light passing hole 905 of the reflector on the beam output from the lamp 901 is reduced. In this way, it is possible that the area of the light passing hole of the reflector 904 is small, so that the impact of the light passing hole on the light output from the lamp is reduced and the light reflected by the lamp is increased. The schematic of the spectrum for the mixed light is shown in FIG. 10. The comparison of FIG. 10 with FIG. 7 indicates that in the distribution of the three primary colors of RGB as shown in FIG 10, the intensity of red light is substantially enhanced, and the requirements of a white field for light distribution is met in a better way.

In this light source device, the light passing hole 905 of the reflector 904 may be disposed at the center of the reflector, or in any other appropriate position, The thickness of the reflector may be very small and the reflector may be in a shape of disc, rectangle, flat, strip or any other planar shape, or may be designed into different shapes, such as paraboloid, hyperboloid or sphere as required.

FIG. 11 is a light source device in which an LED light source as a light source to be supplemented and a laser light source are hybrid for projection display. The structure of the reflector 1103 is the same as that shown in FIG. 8. The LED light source 1101 is a white light emitting LED. After the light emitted from the LED passes the beam shaping device 1102, the divergence angle in the form of Lambertian is compressed. The compressed divergence angle is equal to the aperture angle of the projection system, ±12° for instance. The emergent light from the beam shaping device 1102 is output after being reflected by the reflection part of the reflector 1103 which is plated with wide-band high-reflective film for visible light. The laser light source 1107 is a green light emitting laser device, the laser emitted from the laser light source 1107 enters optical fiber 1105 via the coupling lens group 1106, the emergent light from the optical fiber 1105 is focalized by the focusing lens group 1104, and the divergence angle of the emergent light is controlled within the aperture angle of the projection system. The optical path is adjusted so that the focus of the laser beam is at the light passing hole of the reflector 1103, and the laser beam directly passes through the light passing hole and is converted from convergent beam into divergent beam. The light of the white light emitting LED being reflected by the reflector is mixed with the green laser directly passed, and the mixed light is output in a same direction. The light source device is realized as a hybrid lumination source, and green light is supplemented in addition to LED light. Moreover, if the reflected laser beam is on a same axis with that of the lamp beam, the mixing effect will be better. In the foregoing light source device, the area of the focal spot of the laser beam, after passing the focusing lens group 1104, may be smaller than or equal to the size of the light passing hole. Alternatively, the focus spot of the focusing lens group 1104 may be near the light passing hole and the area of the light spot of the laser beam at the light passing hole is smaller than or equal to the section area of the light passing hole. If the area of the light spot of the laser beam is greater than the section area of the light passing hole, a part of the optical energy of the laser may be wasted. If the area of the light spot of the laser beam is much smaller than the section area of the light passing hole, it is preferred to reduce the section area of the light passing hole and maximize the reflection of the LED light, and otherwise, the optical power of the LED could not be used to a largest extent. The beam shaping device for compressing the divergence angle of the light output from the LED light source may be realized by using a wedge-shaped rectangular pyramid or other optical devices. Those skilled in the art will recognize that the LED light source may be a white light emitting LED light source, or any other monochrome LED light source. In an embodiment, the LED light source may be an LED array as required in practical applications.

FIG. 12 is a side-view illustrating the structure of a reflector according to another embodiment. This reflector includes a reflection part 1201 that reflects the laser emitted from the laser light source, and a transmission part that transmits the beam emitted from the light source to be supplemented directly. Except the reflection part 1201, the upper surface 1202 and the lower surface 1203 of the reflector are both plated with anti-reflection film that enhances the transmission efficiency of the beam emitted from the light source to be supplemented. The surface of the reflection part 1201 of the reflector is plated with high-reflective film that enhances laser reflection. This reflector is made from a transparent material and is in a flat plate shape. The transparent material may include glass, quartz, silicon slice or transparent plastic. The reflection part may be at the center of the reflector, or at one end of the reflector, or in any other position as required. The reflection part may be planar or may be designed into different shapes, such as paraboloid, hyperboloid or sphere as required.

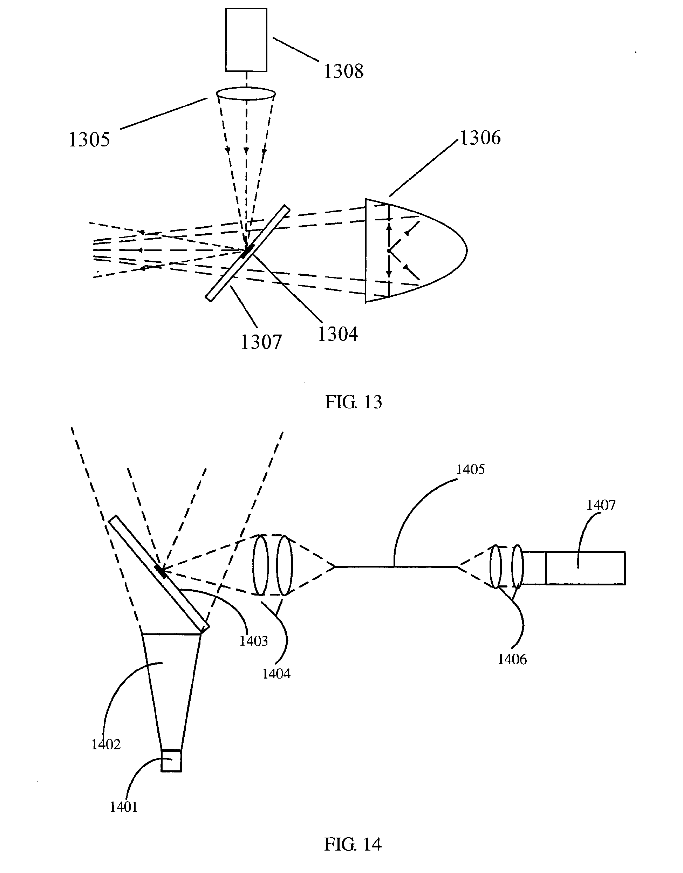

FIG. 13 and FIG. 14 show light source devices in which the reflector shown in FIG. 12 is used according to embodiments respectively.

FIG. 13 shows a light source device, in which laser is supplemented in addition to a lamp, for projection display. The light source device includes a laser light source 1308, a focusing lens 1305, a lamp 1306 and a reflector 1307. The laser light source 1308 is a red light emitting laser device. The reflector 1307 is a flat structure made from glass. The central part 1304 of the reflector is the reflection part which is plated with high-reflective film that is highly reflective to the wavelength of red light. The rest part of the reflector 1307 is the transmission part. The laser beam emitted from the red light emitting laser device 1308 passes through the focusing lens 1305 and then reaches the reflection part 1304 of the reflector 1307 and is reflected thereon and output. The light beam emitted from the lamp 1306 is transmitted directly through the reflector 1307 and then mixed with the laser beam reflected by the reflection part 1304. The optical axes of the two kinds of light in the mixed light coincide, thus the red light is supplemented. The focusing lens 1305 may be replaced with a focusing lens group or other optical devices having a function of focusing. A beam expanding lens may be included in the focusing lens group, so as to increase the divergence of the laser and thus make the mixing effect even better. Moreover, if the reflected laser beam is on a same axis with lamp beam, the mixing effect will be much better. The laser device 1308 may be a solid state laser device, a semiconductor laser device, an optical fiber laser device, a gas laser device or else. The laser device 1308 may be a laser device emitting red light preferably with a wavelength of 630nm~670nm. The lamp herein may be an ultra high-pressure mercury lamp, a metal halide lamp, a halogen lamp or a xenon lamp. The focus of the laser from the focusing lens 1305 should be kept onto or near the surface of the reflection part 1304 of the reflector 1307, so that all incident laser can be reflected while the impact of the reflection part of the reflector on the beam output from the lamp 1306 is reduced. In this way, it is possible that the area of the reflection part of the reflector 1307 is made small, so that the blockage of the reflection part to the light output from the lamp is reduced.

In this light source device, the reflection part of the reflector 1307 may be arranged at the center of the reflector, or on the edge or any other appropriate position. The surface shape of the reflection part may be planar as shown in FIG. 10, or may be designed into different shapes, such as paraboloid, hyperboloid or sphere as required. The reflector 1307 may be made from a transparent material which may includes glass, quartz, silicon slice and transparent plastic. The thickness of the reflector 1307 may be very small and it may be in various shapes such as strip or disc. Those skilled in the art will recognize that the reflection of the laser can be guaranteed if the area of the reflection part is greater than the diameter of the section of the incident laser beam. In this case, it is possible that the light emitted from the light source to be supplemented may be partially transmitted via the reflector, while the rest part is mixed with the laser beam directly without passing through the reflector.

FIG. 14 shows a light source device in which an LED light source as a light source to be supplemented and a laser light source are hybrid for projection display. The LED light source 1401 may be an LED emitting white light. After the light emitted from the LED light source 1401 passes the beam shaping device 1402, the divergence angle in the form of Lambertian is compressed. The compressed divergence angle may be equal to the aperture angle of the projection system, $\pm 12°$ for instance. The emergent light from the beam shaping device 1402 is transmitted through the reflector 1403 directly. Except the reflection part, the surface of the reflector 1403 is plated with wide-band anti-reflection film for visible light. The laser light source 1407 may be a green light emitting laser device. The laser emitted from the laser light source enters optical fiber 1405 via the coupling lens group 1406. The emergent light from the optical fiber 1405 is focalized via the focusing lens group 1404, and its divergence angle is controlled within the aperture angle of the projection system. The surface of the reflector 1403 onto which the laser is incident is plated with high-reflective film that is highly reflective to the wavelength of the laser, and this surface is used as the reflection part of the reflector. The optical path is adjusted, so that the focus of the laser beam is at the reflection part of reflector 1403 on which the laser is reflected and converted from convergent beam into divergent beam. The light emitted from the white light emitting LED, after being transmitted through the reflector, is mixed with the reflected green laser. Therefore, the light source device is realized as a hybrid lumination source, and green light is supplemented in addition to the LED light. In the foregoing light source device, the area of the focal spot of the laser beam may be smaller than or equal to the size of the reflection part. Alternatively, the focus of the laser beam is near the surface of the reflection part and the area of the light spot of the laser beam at the reflection part is smaller than or equal to the area of the reflection part. If the area of the light spot of the laser beam is greater than that of the reflection part, optical energy may be wasted. If the area of the light spot of the laser beam is much smaller than the reflection part, it is preferred to reduce the size of the reflection part and minimize the blockage of LED light, and otherwise the optical power of the LED could not be used to a largest extent. The beam shaping device for compressing the divergence angle of the light output from an LED light source may be realized by using a wedge-shaped rectangular pyramid or other optical devices. Those skilled in the art will recognize that the LED light source may be an LED light source emitting white light, or any other monochrome LED light source depending on the requirements of practical applications.

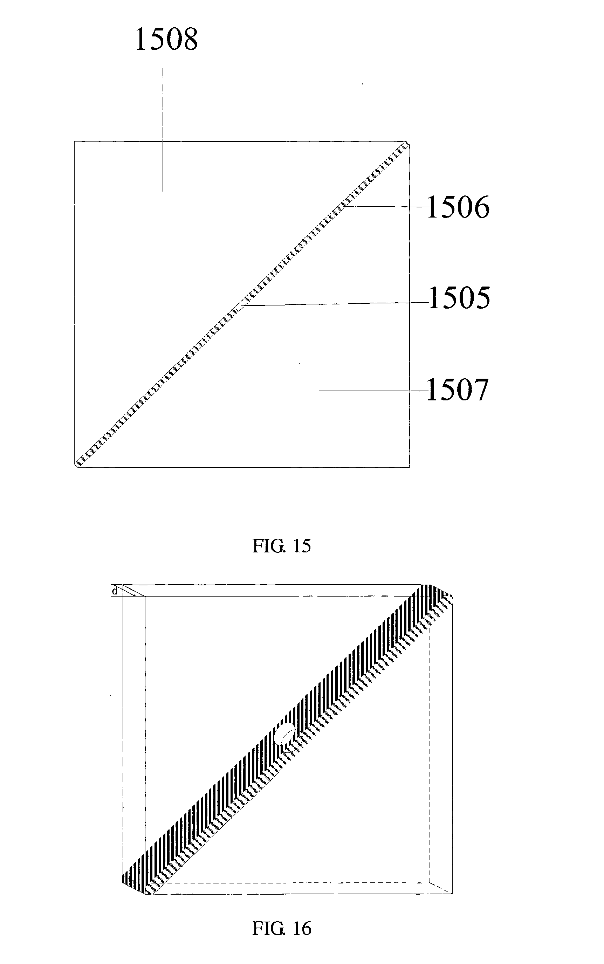

FIG. 15 and FIG. 16 show a reflector prism with a new type of structure. This reflector prism includes two right-triangular prisms 1507 and 1508. Except the central part, the inclined planes of the two right-triangular prisms 1507 and 1508 are bound together with optical adhesive 1506. As optical adhesive 1506 has a certain thickness, an air gap 1505 is formed at the central parts of the two adhesive surfaces. The size of air gap 1505 may be provided to enable the incident laser beam or focalized laser beam to be totally reflected. The section of the air gap may be in a shape of circular, rectangular or in any other appropriate shape. The binding for air gap with circular section is more difficult than the binding for air gap with rectangular section. For the air gap with rectangular section, two surfaces thereof may directly access air, while for the air gap with circular section, since the adhesive area is larger than that of the air gap with rectangular section, more light from the light source to be supplemented may be allowed to pass through for the air gap with circular section. The shape of the air gap may be determined according to practical applications. In application, the surface of a prism may be plated with different film depending on the requirements for the passing of beam. For example, the laser incidence plane on the reflector prism may be plated with anti-reflection film which has high transmittance to the wavelength of the laser, while the incidence plane and emergence plane of the light source to be supplemented on a reflector prism both may be plated with anti-reflection film which has high transmittance for the light source to be supplemented. Under the condition that the section of air gap 1505 is greater than the light spot of the incident laser beam, the thickness d of the reflector prism may be as small as possible, so that the interference in the light output from the light source to be supplemented is reduced. This structure of the reflector prism is more easily fixed due to its larger volume. Moreover, fixing devices, which otherwise may interfere with the optical path, is never needed in the optical path.

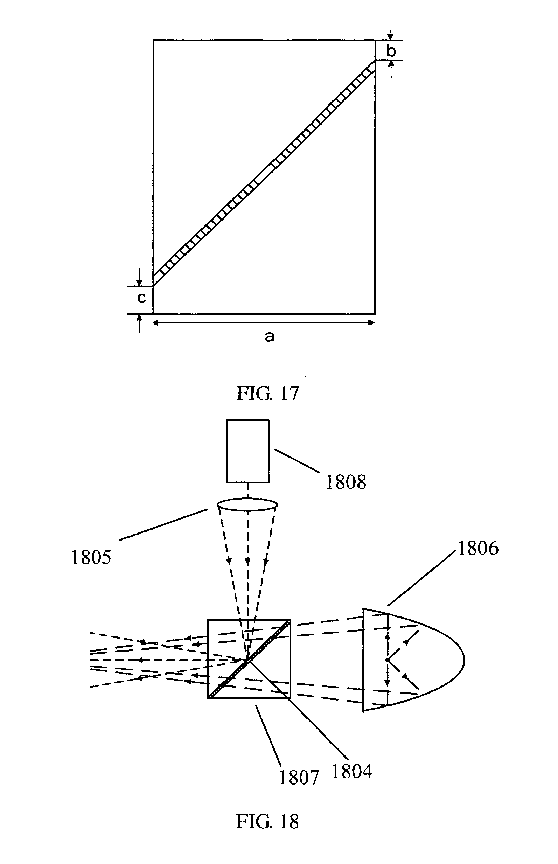

FIG. 17 provides the structure of an alternative reflector prism which is a variant of the structure of a reflector prism as shown in FIG. 15 and FIG. 16. In this alternative reflector prism, two right-trapezoid prisms are used to replace the right-triangular prism as shown in FIG. 15 and FIG. 16. The angle between the inclined plane of the right-trapezoid prism and the right-angle plane is 45°. Other structure is the same as that of the reflector prism shown in FIG. 15 and FIG. 16. Of course, there may be other variants, for example, the length of side b and side c in FIG. 6 may be various, the shape of side a may be any other shape provided it doesn't affect the passing of the light from the light source to be supplemented. In principle, any variants of the shape of the reflector prism without affecting the principal role of the prism should be within the scope of the present invention.

FIG. 18 shows a light source device in which laser is supplemented in addition to a lamp by using a reflector prism with a new structure as shown in FIG. 15 and FIG. 16. The light source device includes a laser light source 1808, a focusing lens 1805, an ultra high-pressure mercury lamp 1806 and a reflector prism 1807. The laser light source 1808 is a solid state laser device emitting red light with wavelength of 635nm. The two right-angle prisms of the reflector prism are both made of K9 glass with refractive index of 1.51, while the optical adhesive therebetween is UV curing adhesive with refractive index of 1.51. After the laser beam emitted from the red light emitting solid state laser device passes through the focusing lens 1805, it perpendicularly enters a right-angle plane of the right-angle prism which is plated with anti-reflection film for laser with wavelength of 635nm (transmittance >99%). The focal spot converged by the focusing lens 1805 is located at the air gap 1804, total reflection occurs at air gap 1804 and light comes out perpendicularly from another right-angle plane of this right-angle prism. The light beam emitted from the ultra high-pressure mercury lamp 1806 enters the right-angle plane of the other right-angle prism and transmits directly through the reflector prism 1807 and then coincides with the optical axis of the laser beam, and thus the red light is supplemented. The incident and emergent right-angle planes for the ultra high-pressure mercury lamp on reflector prism 1807 are both plated with wide-band anti-reflection film for visible light.

In this light source device, the thickness d of the reflector prism may be quite small. Those skilled in the art will recognize that as long as thickens d is greater than the diameter of the light spot of the incident laser beam on the air gap, total reflection of the laser beam may be guaranteed. Under this condition, thickness d may be very small. In this case, only a part of the light emitted from the light source to be supplemented transmits through the reflector prism, while the rest part is directly mixed with the laser beam without transmitting through the reflector prism.

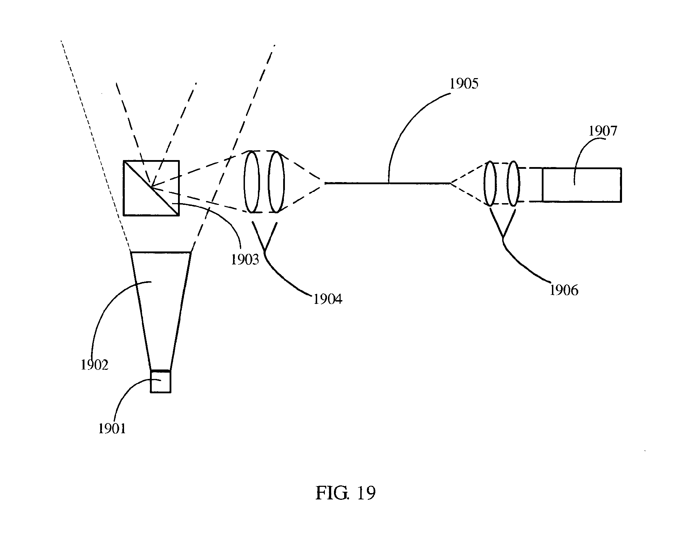

FIG. 19 shows a light source device in which an LED light source as a light source to be supplemented and a laser light source are hybrid for projection display. The structure of this light source device is similar to that shown in FIG. 14, except that a reflector prism with a structure shown in FIG. 15 and FIG. 16 is used as a reflector. The LED light source 1901 is a white light emitting LED. After the light emitted from the LED light source 1901 passes the beam shaping device 1902, the divergence angle in the form of Lambertian is compressed. The compressed divergence angle is equal to the aperture angle of the projection system, ±12° for instance. The emergent light from the beam shaping device 1902 is transmitted through the reflector prism 1903 directly. The incidence and emergence planes of the LED beam on reflector prism 1903 are plated with wide-band anti-reflection film for visible light. The laser light source 1907 may be a solid state laser device emitting green laser with wavelength of 532nm. The laser emitted from the laser light source 1907 enters the optical fiber 1905 via the coupling lens group. The emergent light from the optical fiber 1905 is focalized via the focusing lens group 1904, and its divergence angle is controlled within the aperture angle of the projection system. The laser incidence plane of reflector prism 1903 is plated with anti-reflection film for laser with wavelength of 532nm (transmittance>99%). The optical path is adjusted, so that the focus of the laser beam is at the air gap of the reflector prism 1903, and laser is totally reflected at the air gap, and converted from convergent beam into divergent beam. The light emitted from the LED emitting white light, after being transmitted through the reflector prism, is mixed with the reflected green laser. Therefore, the light source device is realized as a hybrid lumination source, and green light is supplemented in addition to the LED light. In the foregoing light source device, the area of the focal spot of the laser beam may be smaller than or equal to the size of the air gap. Alternatively, the focus of laser beam is near the surface of the air gap and the area of the light spot of the laser beam at the air gap is smaller than or equal to the air gap. If the area of the focal spot of the light beam is greater than the air gap, optical energy may be wasted. If the area of the light spot of the laser beam is much smaller than the air gap, it is preferred to reduce the size of the air gap and minimize the blockage of LED light, and otherwise, the optical power of the LED could not be used to a largest extent.

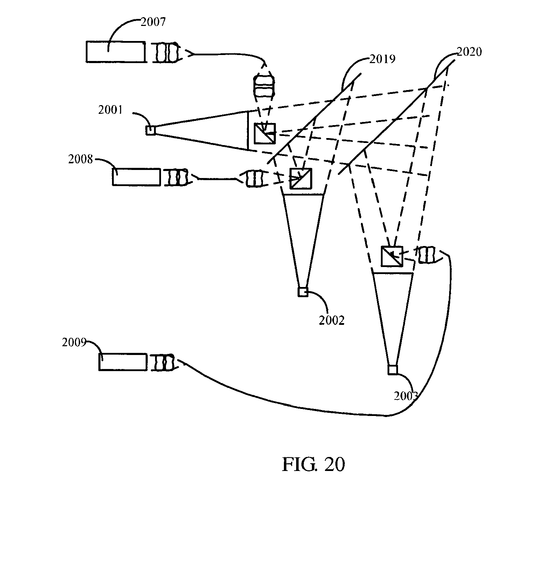

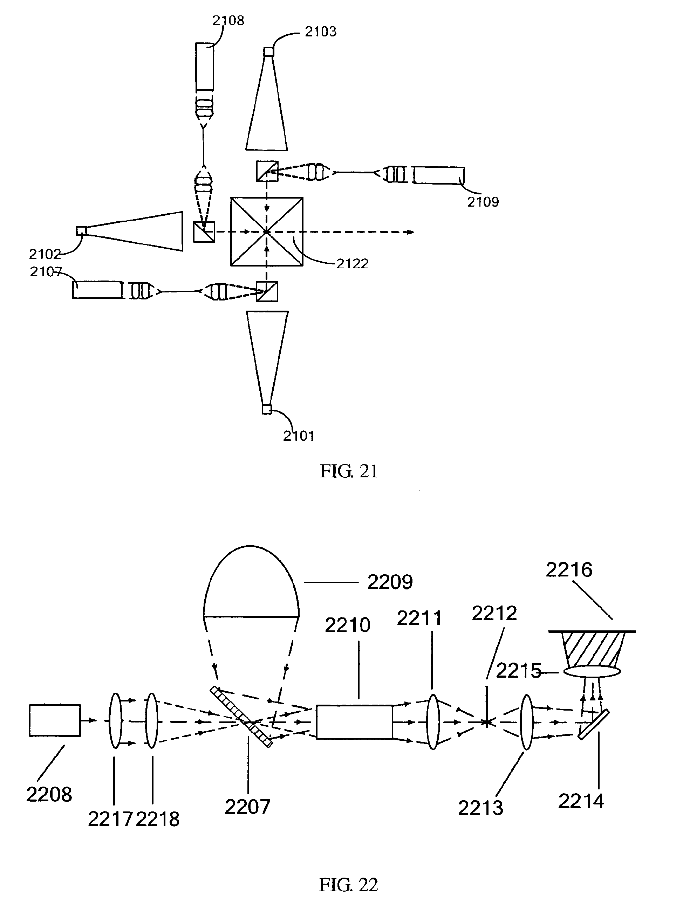

FIG. 20 and FIG. 21 are schematics showing the beam from three-primary-color LED lamps and the beam of RGB laser are combined as a projection display light source according to two embodiments respectively.

The projection display light source as shown in FIG. 20 includes red, green and blue LED lamps, red, green and blue light emitting laser devices, two dichroscopes and three reflector prisms with the structure shown in FIG. 15 and FIG. 16. The red light emitted from the red light emitting LED lamp 2001 is mixed with the red laser emitted from the red light emitting laser device 2007, the green light emitted from the green light emitting LED lamp 2002 is mixed with the green laser emitted from the green light emitting laser device 2008, and the blue light emitted from the blue light emitting LED lamp 2003 is mixed with the blue laser emitted from the blue light emitting laser device 2009. The LED light and laser light in a same color each are mixed in the manner shown in FIG. 19. The mixed red light and the mixed green light are combined via the first dichroscope 2019, and then the red-green mixed light is combined with the mixed blue light via the second dichroscope 2020, and the white light required by the projection display is obtained. Alternatively, the positions of the red light emitting LED and the blue light emitting LED may be exchanged, and accordingly, the positions of the supplemented red light emitting laser device and blue light emitting laser device may be exchanged, and the films of the first dichroscope and the second dichroscope may be exchanged, which will be recognized by those skilled in the art.

In the light source for projection display as shown in FIG. 21, a color-combination prism (X-cube) 2122 is used to replace the two dichroscopes as shown in FIG. 20. Other structure is substantially the same as that shown in FIG. 20. The beams in a same color are mixed in the manner shown in FIG. 19. Likewise, the white light required by the projection display may be obtained. Also, same as FIG. 20, the positions of the optical paths of red light and blue light may be exchanged, but green light must directly pass through the center of the X-cube 2122 without reflection, which will be recognized by those skilled in the art.

The combined white light of FIG. 20 and FIG. 21 may be used in a projection light source with a single digital light processor (DLP), a single liquid crystal on silicon (LCOS) or a single liquid crystal display (LCD). Moreover, as the light source is completely provided by LED lamp and laser device, the timing may be electrically controlled, and the color wheel used in conventional technology may be removed. Furthermore, light in one or more colors may be selectively supplemented as required.

The reflector used in FIG. 20 and FIG. 21 is the reflector prism shown in FIG. 15 and FIG. 16. The light beams in a same color may also be mixed in the manner as shown in FIG. 1-4, FIG. 6, FIG. 11, FIG. 14 and FIG. 19. Light is combined by using the method and structure described with reference to FIG. 20 and FIG. 21.

FIG. 22- FIG. 29 shows optical configurations for projectors using the foregoing light source devices according to embodiments of the present invention.

FIG. 22 shows the optical configuration for a single-DLP projector according to an embodiment. The single-DLP projector includes an ultra high-pressure mercury lamp 2209 as a light source to be supplemented, a laser light source 2208, a beam expanding lens 2217, a focusing lens 2218, a reflector 2207, an optical integrator 2210, a focusing lens group 2211, a color wheel 2212, a relay lens group 2213, a Digital Micro-mirror Device (DMD) 2214, a projection lens group 2215 and a screen 2216. The structure of reflector 2207 is the same as that shown in FIG. 8. The white beam emitted from the ultra high-pressure mercury lamp 2209 reaches the reflection part of the reflector 2207 and is reflected. The laser device 2208 may be a solid state laser device emitting red laser with the wavelength of 635nm. The red laser beam is expanded by the beam expanding lens 2217, the expanded red laser beam enters the focusing lens 2218 and then enters the light passing hole of the reflector 2207. The focus of the red laser beam is at the light passing hole of reflector 2207. The laser beam directly passes the light passing hole of the reflector 2207 directly and output with the reflected beam output from the ultra high-pressure mercury lamp 2209 on a same axis in a same direction. Thus, a hybrid light source for projection display is obtained. The beam expanding lens 2217 increases the divergence of the laser output from the focusing lens 2218, and improves the mixing effect. The beam expanding lens is not necessary when the light spot of the laser device per se can meet the requirements of mixing. The reflection part of the reflector 2207 is plated with wide-band high-reflective film for visible light. The mixed light beam is shimmed by the optical integrator 2210 in the optical path, then is converged by the focusing lens group 2211 and then enters the color wheel 2212, and the green light, blue light and red light are output according to the sequence set by the color wheel. After image rotation via the relay lens group 2213, the beam reaches DMD 2214. The beam treated by DMD 2214 passes the projection lens group 2215 and in the end is irradiated on screen 2216 to form images. In this embodiment, laser light source 2208 emits red laser so as to improve the brightness of the red light in projection display, adjust the intensity distribution of three primary colors - red, blue and green, thus enhancing the color saturation and contrast of images.

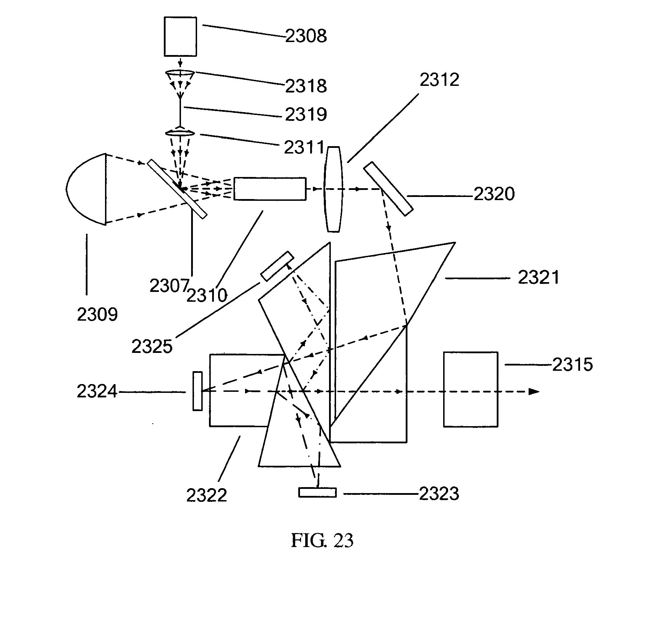

FIG. 23 shows an optical configuration for a tri-DLP projector according to an embodiment. The tri-DLP projector includes an xenon lamp 2309 as a light source to be supplemented, a laser light source 2308, a coupling lens 2318, an optical fiber 2319, a focusing lens 2311, a reflector 2307, an optical integrator 2310, a focusing lens group 2312, a planar reflector 2320, a Total Interface Reflection (TIR) prism 2321, a color splitting/recombining prism 2322, a red, green and blue DMD 2323, 2324 and 2325 and a projection lens group 2315. The beams of the laser and the xenon lamp are mixed by using the reflector with a structure shown in FIG. 12. The thickness and width of the reflector 2307 are 2mm. As the width is small, only a part of the light emitted from the xenon lamp 2309 reaches the reflector. The laser device light source 2308 may be a semiconductor laser device emitting red laser with the wavelength of 635nm. The laser beam passes the coupling lens 2318 and enters the optical fiber 2319. The laser beam emerged from the optical fiber 2319 enters the focusing lens 2311 and then is focalized on the reflection part of the reflector 2307 where it is reflected. As the width of reflector 2307 is small, a part of the light emitted from the xenon lamp 2309 as a light source to be supplemented reaches and transmits through the reflector 2307 and is mixed with the laser beam, and the rest part is directly mixed with the laser beam. The reflection part of the reflector 2307 is plated with high-reflective film for laser with the wavelength of 635nm. The transmission part of the reflector 2307 is plated with wide-band anti-reflection film for visible light. The mixed beam is shimmed by the optical integrator 2310, converged by the focusing lens group 2312, reflected by the planar reflector 2320 and then enters TIR prism 2321. The TIR prism 2321 is to separate emergent light from incident light, so that the incident light are totally reflected and the emergent light is transmitted without interfere with each other. The incident mixed light is reflected by the TIR prism 2321 into the color splitting/recombining prism 2322. The color splitting/recombining prism 2322 splits the mixed light into blue, green and red colors in sequence. The split light enters blue, green and red DMD 2325, 2324 and 2323, respectively. Subsequently, red and green beams are combined firstly, and then the blue light is combined with red-green mixed light, and at last the combined light pass TIR prism 2321 and are output as emergent light, and enter the projection lens group 2315 to form images. The TIR prism 2321 and the color splitting/recombining prism 2322 are both optical devices well known to those skilled in the art, and the second paragraph at the first page in U.S patent US6863401B2 may be referred to for the structures thereof.

Those skilled in the art will recognize that in addition to the xenon lamp, an LED lamp (including LED array), an ultra high-pressure mercury lamp, a metal halide lamp, a halogen lamp or else may also be used as a light source for projection display.

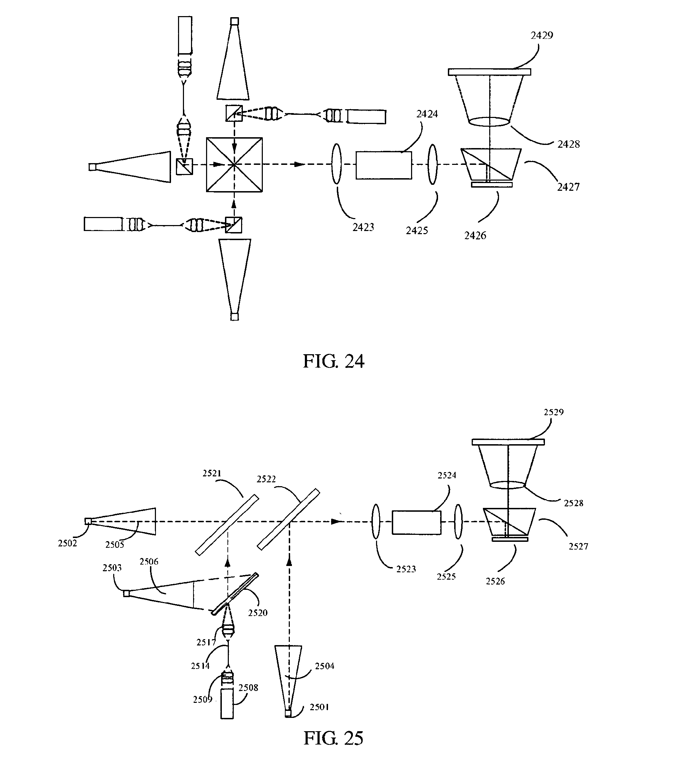

FIG. 24 is a schematic of the optical configuration for a single-DLP projector in which the beam from a three-primary-color LED lamp and the beam of RGB laser are combined as a projection display light source. The part of the combined light of the LED and the laser as a projection light source is the same as the optical path shown in FIG. 21. The mixed beam is converged by a focusing lens group 2423 to an optical integrator 2424 where it is shimmed. After image rotation by a relay lens group 2425, the beam enters a TIR prism 2427. After processed on DMD 2426, it is reflected, and exits from the TIR prism 2427 to a projection lens group 2428 and forms images on screen 2429. In this optical path, the timing is electrically controlled, and thus the color wheel in conventional single-DLP optical path is removed. After mixed and supplemented with laser, the brightness of the red, green and blue in the projection system is remarkably improved. Further, the red, green and blue light emitting laser devices with different power may be selected depending on the requirements of light distribution ratio of white light. Particularly, green light emitting laser device with high power may be used for the situation that the green light is inadequate.

FIG. 25 is a schematic of the optical configuration for a single-DLP projector in which the beam from a three-primary-color LED lamp and the beam of monochrome laser are combined as a projection display light source. The part of the combined light of the LED and the laser as a projection light source is substantially the same as that shown in FIG. 20. The different is that only a green light emitting laser device is used to supplement green light in addition to the light of the LED lamp, while red and blue are not supplemented, and that the green light emitting laser device is supplemented by using the reflector with a structure shown in FIG. 8. The mixed white light is converged via a focusing lens group 2523 and shimmed in an optical integrator 2524. After image rotation by a relay lens group 2525, the light enters a TIR prism 2527. After processed on DMD 2526, it is reflected and then exits from the TIR prism 2527 to a projection lens group 2528 and images on screen 2529. In this optical path, the timing is also electrically controlled. In this projection display light source, at color temperature 6500K, a projection system using 0.79-inch imaging chip and F2.4 projection lens is used; and all LED lamps are LED arrays, and the light-emitting area is 7mm$^2$. Before supplementing the green light emitting laser device, the optical power of red, green and blue light emitting LED arrays is about 0.8W for red light, 0.7W for green light and 1.4W for blue light. The optical power of red light and blue light is limited since the green light has reached its maximum optical power. In this projection display light source, after the laser device emitting green laser with the wavelength of 532nm and with optical power of 0.65W is supplemented, the optical power of red, green and blue is increased to about 1.2W for red light, about 1.1W for green light and about 1.8W for blue light. After the green light emitting laser device is supplemented, the brightness of the white light output from the light source device is increased by about 50%. This method greatly improves the brightness and color saturation of the green light, thereby improving the overall brightness of the white light.

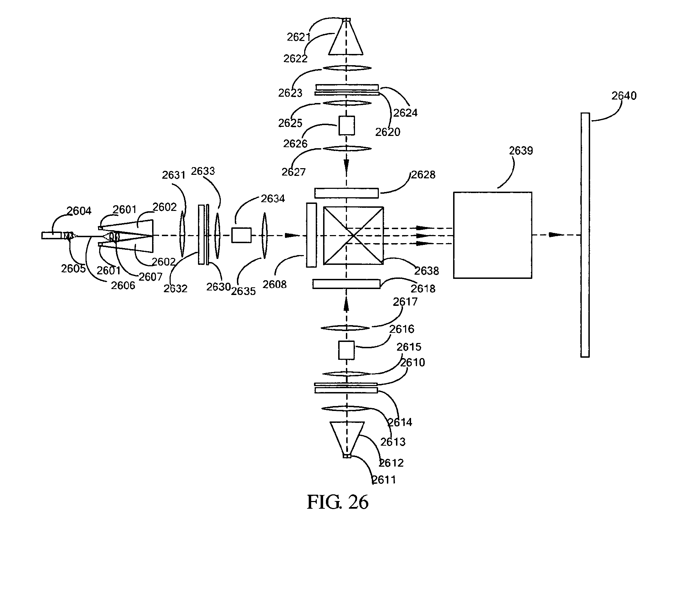

FIG. 26 is an embodiment of the optical configuration for a tri-LCD projector in which the beam from a three-primary-color LED lamp and the beam of monochrome laser are combined as a projection display light source. In FIG. 26, the beam of the green LED array 2601 and the beam of green light emitting laser device 2604 are combined in a manner shown in FIG. 1, and red LED array 2611 and blue LED array 2621 are not supplemented with laser, the two LEDs for red light emitting LED array 2611 or blue light emitting LED array 2621 are arranged in parallel and share a beam shaping devices 2612 or 2622, respectively. The mixed green light passes a collimating lens 2631, a reflective polarizer 2632, λ/2 plate 2630, a focusing lens 2633, an optical integrator 2634, a relay lens group 2635 and a green LCD liquid crystal light valve 2608 in sequence and then enters X-cube 2638. The red and blue LED arrays 2611 and 2621 respectively pass collimating lens 2613 and 2623, reflective polarizers 2614 and 2624, λ/2 plates 2610 and 2620, focusing lens 2615 and 2625, optical integrators 2616 and 2626, relay lens groups 2617 and 2627 and LCD liquid crystal light valves 2618 and 2628 and enter X-cube 2638. X-cube 2638 recombines the three primary colors of RGB. The light forms images on screen 2640 through projection lens group 2639. In order to improve the utilization efficiency of light beam, a wedge-shaped rectangular pyramid may be used as the beam shaping device for compressing the divergence angle of the beam output from an LED lamp. In this case, a reflective polarizer may also be used to let P light pass. The p light is converted into S light after passing through the $\lambda/2$ plate; the S light not passing the reflective polarizer will be reflected back to the wedge-shaped rectangular pyramid. After reflected by the surface of wedge-shaped rectangular pyramid and LED repeatedly, the light is depolarized into natural light, thereby realizing the partial reutilization of S light.

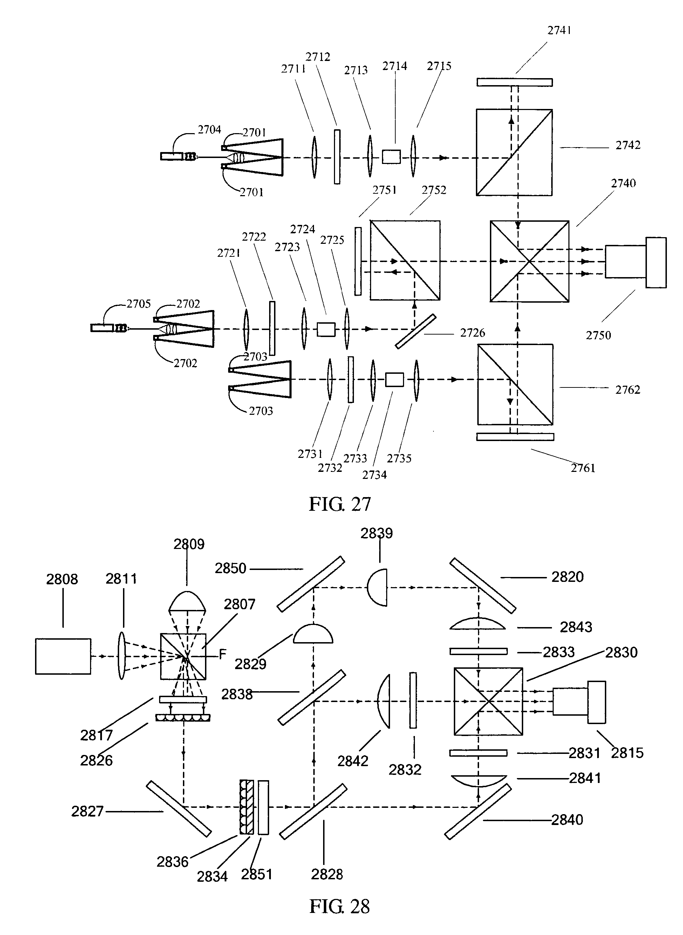

FIG. 27 is an embodiment of the optical configuration for a three LCOS projector in which the beam from a three-primary-color LED lamp and laser beam are combined as a projection display light source. In FIG. 27, the beams of a blue light emitting LED array 2701 and a green light emitting LED array 2702 and the beams of blue light emitting laser device 2704 and green light emitting laser device 2705 are combined in the manner shown in FIG. 1 respectively, and a red light emitting LED array 2703 is not supplemented by laser. The mixed blue light passes a collimating lens 2711, a reflective polarizer 2712, a focusing lens 2713, an optical integrator 2714, a relay lens group 2715,a PBS2742 and a blue light emitting LCOS2741 in sequence and then enters an X-cube 2740. The mixed green light passes a collimating lens 2721, a reflective polarizer 2722, a focusing lens 2723, an optical integrator 2724, a relay lens group 2725, a planar reflector 2726, a PBS2752 and a green light emitting LCOS 2751 in sequence and then enters the X-cube 2740. The red light directly enters a collimating lens 2731, a reflective polarizer 2732, a focusing lens2733, an optical integrator 2734, a relay lens group 2735, a PBS2762 and a red light emitting LCOS 2761 in sequence without supplemented with a laser device and then enters the X-cube 2740. The X-cube 2740 recombines three-primary-color light of RGB. Through projection lens group 2750, the light is projected to a screen, thereby realizing projection display of images. In order to improve the utilization efficiency of beam, a wedge-shaped rectangular pyramid may be used as the beam shaping device for compressing the divergence angle of the beam output from an LED lamp. In this case, a reflective polarizer may also be used to let P light pass. The S light not passing the reflective polarizer will be reflected back to the wedge-shaped rectangular pyramid. After reflected by the surface of wedge-shaped rectangular pyramid and LED repeatedly, the light is depolarized into natural light, thereby realizing the partial reutilization of S light. The function of the PBS is that, after the p polarized light of the incident light is reflected, the incident light is modulated and converted into s polarized light on the surface of LCOS. The s polarized light transmits through the PBS and then enters X-cube.

FIG. 28 is an embodiment of the optical configuration for a projector using three liquid crystal light valves. The mixing of the light output from the light source to be supplemented and laser is realized by using the reflector prism shown in FIG. 15 and FIG. 16. The reflector prism may be made of K9 glass with refractive index of 1.51. The optical adhesive may be UV curing adhesive with refractive index of 1.51. A laser light source 2808 may be a solid state laser device emitting red laser with wavelength of 635nm. The laser beam is focalized to the air gap of a reflector prism 2807 via the first focusing lens group 2811. After total reflection, the light exits. The light source lamp as a light source to be supplemented may be an ultra high-pressure mercury lamp 2809. The focal plane F of the ultra high-pressure mercury lamp 2809 that outputs convergent beam is adjusted, so that the focus of the laser beam is on the focal plane F and as close to the focus of the light output from the ultra high-pressure mercury lamp 2809 as possible, while the focus of the light output from the ultra high-pressure mercury lamp 2809 is not on the air gap of the reflector prism 2807. After passing the reflector prism 2807, the two beams are output in a same direction, thereby realizing mixing. A beam expanding lens may be included in the first focusing lens group. The laser incidence plane of reflector prism 2807 may be plated with anti-reflection film for laser with wavelength of 635nm. The incidence plane and emergence plane of the reflector prism 2807 corresponding to the light output from the ultra high-pressure mercury lamp 2809 may be plated with wide-band anti-reflection film for visible light. The mixed beam becomes parallel or quasi-parallel light after passing the second focusing lens group 2817, the parallel or the quasi-parallel light is shimmed through the first fly-eye lens 2826, and then passes the first planar reflector 2827, the second fly-eye lens 2836, PBS array 2834 and the third focusing lens group 2851 in sequence. The first planar reflector 2827 is used to reflect light. The second fly-eye lens 2836 also is used for shimming. PBS array 2834 converts natural mixed light into polarized light; the polarized light exiting from the third focusing lens group 2851 is separated into blue light and red-green mixed light on the first dichroscope 2828. The blue light passes the second planar reflector 2840, the first field lens 2841 and the first liquid crystal light valve 2831 in sequence and then enters the X-cube 2830. The red-green mixed light is further separated into green light and red light on the second dichroscope 2838. The green light passes the second field lens 2842 and the second LCD board 2832 and then enters the X-cube 2830. The red light passes the first relay lens 2829, the third planar reflector 2850, the second relay lens 2839, the fourth planar reflector 2820, the third field lens 2843, and the third LCD board 2833 and then enters the X-cube 2830. In this way, the three beams of RGB are recombined in the X-cube 2830 and then projected by projection lens group 2815 onto a screen, thereby realizing image display. The blue light and green light have same optical path length and the optical path length of red light is longer, the relay lens is used to impart red light with an effect of same optical path length as that of blue and green light.

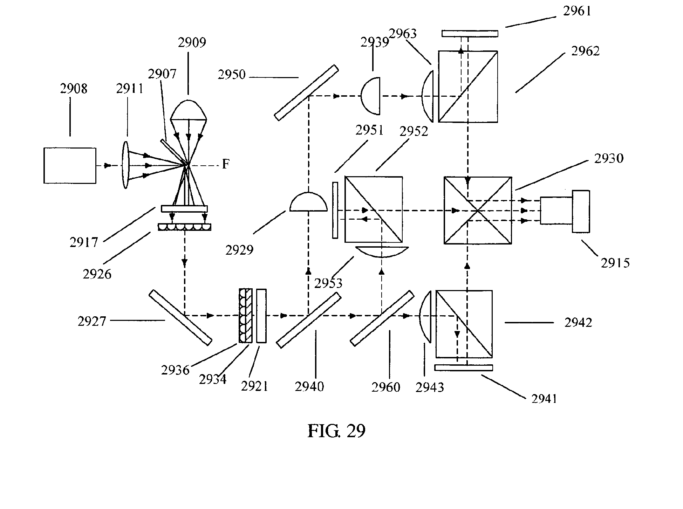

FIG. 29 is an embodiment of the optical configuration for a three LCOS projector. The three LCOS projector includes an ultra high-pressure mercury lamp 2909 as a light source to be supplemented, a laser light source 2908 emitting red laser with wavelength of 635nm, a first focusing lens group 2911, a reflector 2907 with a structure shown in FIG. 12, a second focusing lens group 2917, a first and a second fly-eye lens 2926 and 2936, a first planar reflector 2927, a PBS array 2934, a third focusing lens group 2921, a first and a second dichroscopes 2940 and 2960, a first and a second relay lens 2929 and 2939, three LCOS 2941, 2951 and 2961, three PBS 2942, 2952 and 2962, a X-cube 2930 and a projection lens group 2915. In this embodiment, the optical structure for mixing light beams in a first part of the projection display light source is similar to that shown in FIG. 28, while the subsequent part adopts a conventional three LCOS scheme. In other words, in the subsequent part of the optical structure, the PBS array 2934 converts the natural light into p polarized light, the light reaches the first dichroscope 2940 after passing the third focusing lens group 2921, the first dichroscope 2940 separates the incident p polarized light into red light and blue-green mixed light. The red light passes the first relay lens 2929, the second planar reflector 2950, the second relay lens 2939 and the first field lens 2963 in sequence and then reaches the first PBS2962, the first PBS2962 reflects the incident p polarized red light, the red light then is modulated and converted into s polarized light on the surface of red light emitting LCOS 2961, and the s polarized red light transmits through the first PBS 2962 and enters the X-cube 2930. The blue-green mixed light passes the second dichroscope 2960 and is separated into blue light and green light. The p polarized blue light firstly passes the second lens 2943, the second PBS 2942, and is reflected and modulated and converted into s polarized light on the surface of blue light emitting LCOS 2941, and then transmits through the second PBS 2942 and enters the X-cube 2930. Similar to the blue light, the p polarized green light passes the third field lens 2953, is reflected by the third PBS 2952, is modulated into s polarized light on the surface of green light emitting LCOS 2951, transmits through the third PBS 2952 and enters the X-cube 2930. After the X-cube 2930 recombines three-primary-color light of RGB, the light is projected by projection lens group 2915 onto a screen, thereby realizing projection display of images. As blue light and green light have same optical path length and the optical path length of red light is longer, the relay lens is used to impart red light with an effect of same optical path length as that of the blue and green light.

Although FIGs. 22-29 illustrate several exemplary embodiments of the projectors, those skilled in the art will recognize that the light source for the projector may be replaced or modified by using various light source devices of the present invention according to practical applications without affecting the projection optical structure.

It is to be noted that in each of the foregoing light source devices and projectors, the red, green and blue optical paths should have same optical path length, which is obvious for those skilled in the art.

According to the requirements of practical applications, in the light source device of the present invention, laser with other wavelength or color may be mixed with light emitted from a lamp or an LED. It should be noted that the embodiments in the foregoing drawings are intended to illustrate the structures and technical schemes of the light source devices in the present invention only and not to limit the present invention.

## Claims

1. A light source device for projection display, comprising a light source (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) to be supplemented and a laser light source (106, 206, 306, 316, 406, 416, 502, 607, 902, 1107, 1407, 1808, 1907, 2208, 2308, 2604, 2808, 2908), wherein the laser emitted from the laser light source (106, 206, 306, 316, 406, 416, 502, 607, 902, 1107, 1407, 1808, 1907, 2208, 2308, 2604, 2808, 2908) and the light emitted from the light source (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) to be supplemented are coaxially mixed and then output in a same direction;

   **characterised in that** the light source (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) to be supplemented is an LED light source comprising a plurality of LEDs with at least one laser hole (112, 302, 312, 408, 418, 802, 905) therebetween, and the laser emitted from the laser light source (106, 206, 306, 316, 406, 416, 502, 607, 902, 1107, 1407, 1808, 1907, 2208, 2308, 2604, 2808, 2908) is output through the laser hole (112, 302, 312, 408, 418, 802, 905) and is mixed directly with the light emitted from the LED light source and output in a same direction.

2. A light source device as in claim 1, wherein the light source (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) to be supplemented comprise an LED lamp.

3. A light source device as in claim 1, wherein a plurality of laser holes (112, 302, 312, 408, 418, 802, 905) are symmetrically arranged on the LED light source.

4. A projection device, wherein the projector uses the light source device as claimed in any of claims 1-3 as the light source (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) of the projector.

**Patentansprüche**

1. Lichtquelleneinrichtung zur Projektion einer Anzeige, die eine zu ergänzende Lichtquelle (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) und eine Laserlichtquelle (106, 206, 306, 316, 406, 416, 502, 607, 902, 1107, 1407, 1808, 1907, 2208, 2308, 2604, 2808, 2908) umfasst, wobei der aus der Laserlichtquelle (106, 206, 306, 316, 406, 416, 502, 607, 902, 1107, 1407, 1808, 1907, 2208, 2308, 2604, 2808, 2908) emittierte Laser und das aus der zu ergänzenden Lichtquelle (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) emittierte Licht koaxial gemischt und dann in einer gleichen Richtung ausgegeben werden;
   **dadurch gekennzeichnet, dass** die zu ergänzende Lichtquelle (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) eine LED-Lichtquelle ist, die mehrere LEDs mit mindestens einem Laserloch (112, 302, 312, 408, 418, 802, 905) dazwischen umfasst, und der aus der Laserlichtquelle (106, 206, 306, 316, 406, 416, 502, 607, 902, 1107, 1407, 1808, 1907, 2208, 2308, 2604, 2808, 2908) emittierte Laser durch das Laserloch (112, 302, 312, 408, 418, 802, 905) ausgegeben wird und mit dem von der LED-Lichtquelle emittierten Licht direkt gemischt und in eine gleiche Richtung ausgegeben wird.

2. Lichtquelleneinrichtung nach Anspruch 1, wobei die zu ergänzende Lichtquelle (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) eine LED-Lampe umfasst.

3. Lichtquelleneinrichtung nach Anspruch 1, wobei mehrere Laserlöcher (112, 302, 312, 408, 418, 802, 905) symmetrisch auf der LED-Lichtquelle angeordnet sind.

4. Projektionseinrichtung, wobei der Projektor die Lichtquelleneinrichtung nach einem der Ansprüche 1-3 als Lichtquelle (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) des Projektors verwendet.

**Revendications**

1. Dispositif de source de lumière pour un affichage par projection, comprenant une source de lumière (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) devant être complétée et une source de lumière laser (106, 206, 306, 316, 406, 416, 502, 607, 902, 1107, 1407, 1808, 1907, 2208, 2308, 2604, 2808, 2908), le laser émis par la source de lumière laser (106, 206, 306, 316, 406, 416, 502, 607, 902, 1107, 1407, 1808, 1907, 2208, 2308, 2604, 2808, 2908) et la lumière émise par la source de lumière (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) devant être complétée étant mélangées coaxialement puis fournies en sortie dans une même direction ;
   **caractérisé en ce que** la source de lumière (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) devant être complétée est une source de lumière DEL comprenant une pluralité de DEL avec au moins un trou de laser (112, 302, 312, 408, 418, 802, 905) entre elles, et le laser émis par la source de lumière laser (106, 206, 306, 316, 406, 416, 502, 607, 902, 1107, 1407, 1808, 1907, 2208, 2308, 2604, 2808, 2908) est fourni en sortie à travers le trou de laser (112, 302, 312, 408, 418, 802, 905) et est mélangé directement avec la lumière émise par la source de lumière DEL et est fourni en sortie dans la même direction.

2. Dispositif de source de lumière selon la revendication 1, dans lequel la source de lumière (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) devant être complétée comprend une lampe DEL.

**3.** Dispositif de source de lumière selon la revendication 1, dans lequel une pluralité de trous de laser (112, 302, 312, 408, 418, 802, 905) sont agencés symétriquement sur la source de lumière DEL.

**4.** Dispositif de projection dans lequel le projecteur utilise le dispositif de source de lumière selon l'une quelconque des revendications 1 à 3 en tant que source de lumière (104, 114, 204, 214, 304, 314, 324, 404, 414, 424, 434, 501, 601, 901, 1101, 1401, 1806, 1901, 2001, 2002, 2003, 2007, 2008, 2209, 2309, 2601, 2611, 2621, 2701, 2702, 2703, 2704, 2705, 2809, 2909) pour le projecteur.

FIG. 1

FIG. 2

FIG. 3

FIG. 4

502

503

501

504

FIG. 5

605

607

603

604

606

602

601

FIG. 6

FIG. 7

FIG. 8

901

903

904          905          902

FIG. 9

Red

Intensity          Green

Blue

400          500          600          700 Wavelength (nm)

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

**EP 2 216 679 B1**

REFERENCES CITED IN THE DESCRIPTION

**Patent documents cited in the description**

- US 6561654 B
- CN 1734347
- JP 2006337941 A
- JP 2006301114 A
- JP 2007206359 A
- JP 2004226460 A
- US 6863401 B2